# EUROPEAN PATENT SPECIFICATION

(11) **EP 2 522 929 B1**
(45) Date of publication and mention of the grant of the patent: **03.12.2014**
(21) Application number: 12167027.7
(22) Date of filing: 07.05.2012
(51) Int. Cl.: F24J 2/52, H01L 31/042

(54) **Modular photovoltaic apparatus**
Modulare photovoltaische Vorrichtung
Appareil photovoltaïque modulaire

(30) Priority: 10.05.2011 IT VI20110120
(43) Date of publication of application: 14.11.2012
(73) Proprietor: PR.EN.AL. S.R.L., 36100 Vicenza (IT)
(72) Inventor: Tecchio, Giancarlo, 36100 VICENZA (IT)
(74) Representative: Bonini, Ercole

(56) References cited:
- EP-A1- 0 334 215
- DE-A1- 10 344 202
- DE-U1-202007 010 330
- JP-A- 2003 336 357
- US-A1- 2010 065 108

## Description

The present invention concerns a modular photovoltaic apparatus, particularly but not exclusively suited to be installed on the roof of buildings.

Photovoltaic apparatuses of different types are known, which are usually placed on the roof of buildings.

These photovoltaic apparatuses comprise a plurality of photovoltaic modules adjacent to each other, each one of which is capable of converting solar energy directly into electric energy and is used as a current generator in a photovoltaic system.

The photovoltaic cell or solar cell is the base element in the construction of a photovoltaic module.

The most widespread version of photovoltaic cell, the one made of a crystalline material, is constituted by a thin sheet of a semi-conductor material, the most common being monocrystalline or polycrystalline silicon.

Each individual photovoltaic cell is wired on its surface with a grid of a conductor material that channels its electrons and is connected to the other cells by means of metal strips so as to obtain series and parallel electric connections.

However, the photovoltaic apparatuses of the known type pose some drawbacks.

First of all, the photovoltaic apparatuses presently on the market are used so as to be arranged on the structure of roofs and do not serve as a covering for the buildings.

This means that it is always necessary to have a covering surface, preferably a roof, in order to place the photovoltaic apparatus on it.

In this regard, the patent documents US 2010/065108 A1 and DE 20 2007 010330 U1 both concern a connection system for photovoltaic modules. However, in both cases the connection of the photovoltaic modules takes place also through fixing means like screws and bolts, which serve to couple the individual photovoltaic modules above the covering or roof of the building.

In these connection systems, therefore, the connection of the individual photovoltaic modules does not guarantee the water tightness of the photovoltaic apparatus and therefore, in these cases, the rainwater that falls on the individual photovoltaic modules penetrates in the interspaces present between adjacent photovoltaic modules and falls on the covering underlying the photovoltaic apparatus.

The present invention intends to overcome the drawbacks described above.

In particular, it is the main object of the present invention to provide a modular photovoltaic apparatus that can serve as a covering for buildings, thus replacing roofs or, in general, the covering structures of the building themselves.

It is a further object of the present invention to provide a photovoltaic apparatus that avoids the use of fixing and sealing means like screws, bolts and gaskets for the assembly of the individual photovoltaic modules.

It is another, yet not the least object of the present invention to provide a modular photovoltaic apparatus that, in addition to permitting the mechanical connection between individual photovoltaic modules, provides a watertight structure that allows rainwater to be channelled in special collection areas inside it, thus preventing the flow of rainwater towards the walls of the underlying building.

The objects described above are achieved by the present invention regarding a modular photovoltaic apparatus whose main characteristics are in accordance with the indications of the main claim.

Further characteristics of the invention are illustrated in the dependent claims. Advantageously, the photovoltaic apparatus according to the invention makes it possible to provide a structure that replaces roofs.

Advantageously to the same extent, the photovoltaic apparatus according to the invention allows the assembly of the individual photovoltaic modules thanks to the presence of shaped profiles along the perimeter edge of each photovoltaic module, which are coupled with each other through a sliding joint. Advantageously to the same extent, the assembly of the individual photovoltaic modules of the photovoltaic apparatus according to the invention by means of a sliding joint avoids the use of screws or bolts and allows the entire photovoltaic apparatus to absorb any thermal expansion.

To the same advantage, said shaped profiles of the photovoltaic apparatus according to the invention define around each photovoltaic module a structure similar to a frame that assumes the double function of conveying rainwater to special collection channels inside the photovoltaic apparatus and providing an element for connection to adjacent photovoltaic modules, thus creating a modular photovoltaic apparatus that is tight in the presence of weather agents like rain, snow etc.

The objects and advantages described above will be highlighted in greater detail in the following description, which is provided by way of non-limiting example with reference to the attached drawings, wherein:
- Figure 1 shows a perspective and schematic overall view of the modular photovoltaic apparatus according to the invention;
- Figure 2 shows a detail of Figure 1 in which the photovoltaic modules making up the apparatus of Figure 1 are two;
- Figure 3 shows a section view of Figure 2 along line III-III;
- Figures 3a, 3b show enlarged views of details of Figure 3;
- Figures 4a, 4b, 4c, 4d show section views of various details of Figure 2.

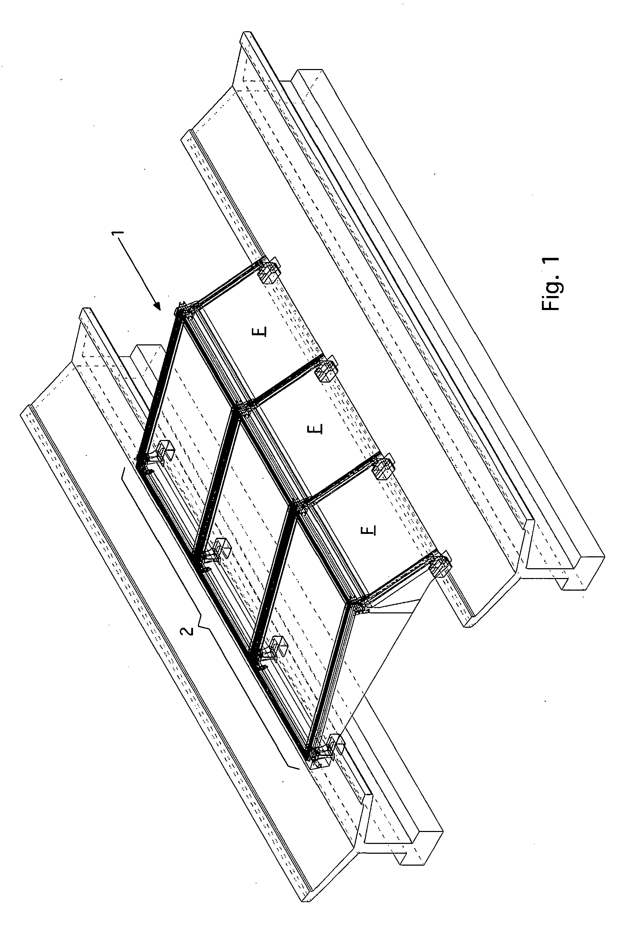

Figure 1 shows a schematic and purely indicative view of a modular photovoltaic apparatus **1.**

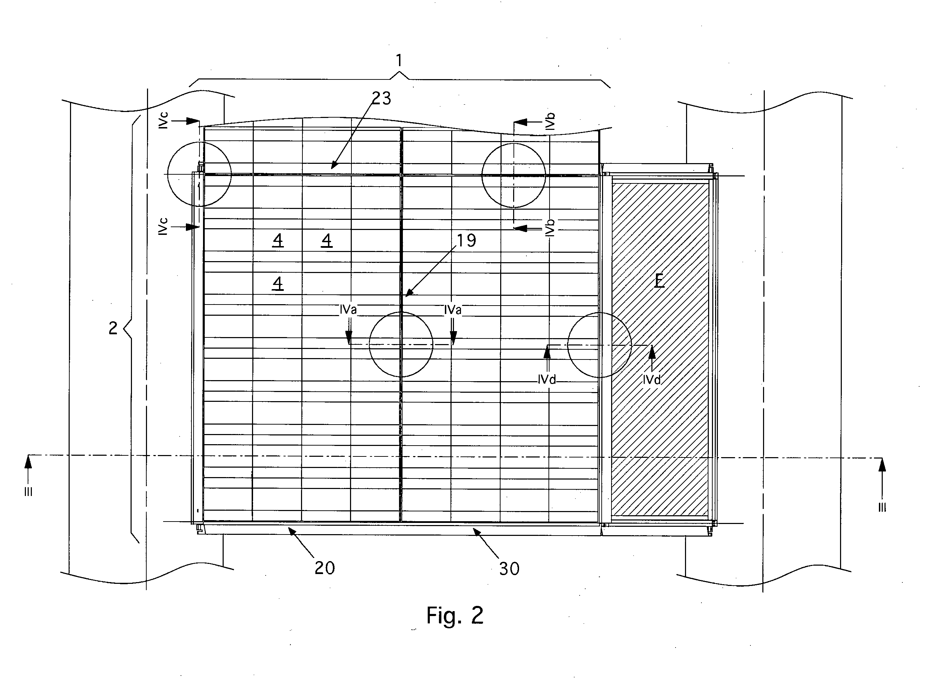

The same apparatus **1** of the invention in the embodiment described below is visible in Figure 2, where it comprises two photovoltaic modules; however, the apparatus **1** may comprise, in different embodiments not illustrated in the drawings, any number of photovoltaic modules and therefore more than two photovoltaic modules.

With reference to Figures 1 and 2, the modular photovoltaic apparatus according to the invention, indicated as a whole by **1,** comprises two or more photovoltaic modules **2, 20, 30** adjacent to each other, each one of which comprises a plurality of photovoltaic cells **4.**

Along the perimeter sides of each photovoltaic module **2, 20, 30** there are a first perimeter edge **19** and a second perimeter edge **23** incident on each other.

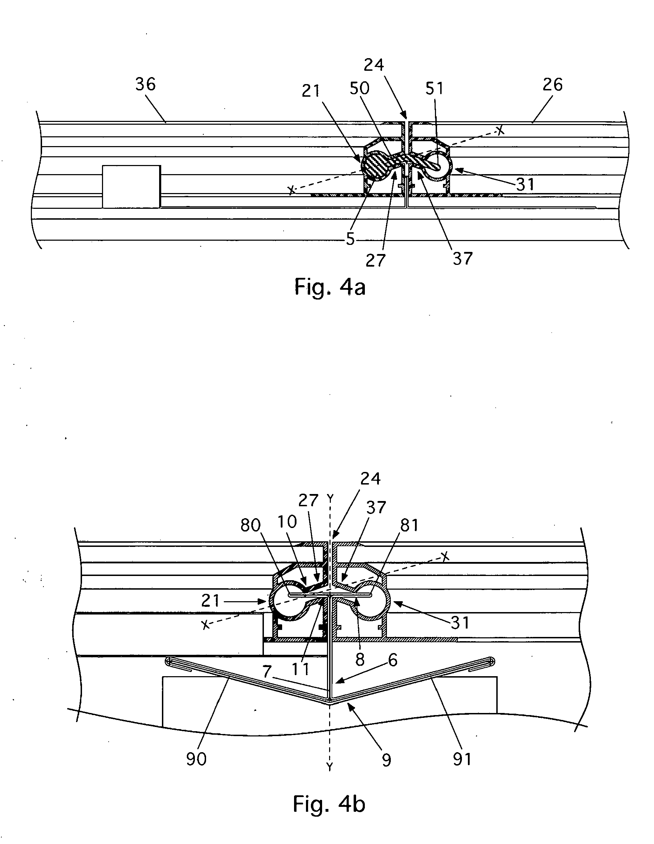

With reference to Figure 2, in each perimeter edge **19, 23** of the photovoltaic apparatus **1** it is possible to identify channels **21, 31** (see Figures 4a, 4b) that cross it longitudinally and house connection means suited to connect two adjacent photovoltaic modules **20, 30.**

According to the present invention, the photovoltaic modules **20, 30** are spaced from each other in such a way as to define interspaces between adjacent photovoltaic modules **20, 30.**

In particular, and with reference to Figures 4a, 4b, the channel **21** has in cross section a C-shaped profile whose open portion defines a duct **27** that defines a longitudinal axis X incident on the plane defined by each photovoltaic module and that communicates with an interspace **24.**

Analogously, and with reference to Figures 4a, 4b, the channel **31** has in cross section a C-shaped profile whose open portion defines a duct **37** communicating with the interspace **24.**

The interspaces **24** make it possible to channel rainwater from the external surfaces **26, 36** respectively in the modules **20** and **30,** in the C-shaped profile of the photovoltaic modules **20** and **30** through the corresponding interspaces **24** and the ducts **27, 37.**

The connection means between the adjacent photovoltaic modules **20, 30** comprise first connection means, arranged along the first perimeter edge **19** of each photovoltaic module and coupled in the channels **21, 31** mentioned above.

With reference to Figure 4a, said first connection means comprise a shaped bar **5** whose cross section has a C-shaped profile.

In particular, the C-shaped profile of the shaped bar **5** is provided with a shaped projection in which it is possible to identify a first part **50** coupled with the channel of the photovoltaic module **30** and a second part **51,** in continuity with the first part **50** and incident on it, which is inserted in the channel of the adjacent photovoltaic module **20.**

The connection means between the adjacent photovoltaic modules **20, 30** also comprise second connection means arranged along the second perimeter edge **23** and coupled in the channels **21, 31.**

Said second connection means comprise a shaped beam **6,** visible in Figure 4b, whose cross section has a substantially H-shaped profile.

Always with reference to Figure 4b and according to the present invention, the cross section profile of the substantially H-shaped beam **6** is defined by a core **7** delimited by a first platband **8** and a second platband **9** in the shape of a V. The first platband **8** is symmetrical with respect to the core **7** and to an axis **Y** perpendicular to the plane of the photovoltaic modules; the first platband **8** comprises two projecting tabs **80, 81,** each one of which is coupled through insertion in the open portion of the C-shaped channel of the adjacent photovoltaic modules **20, 30.**

The second V-shaped platband **9** of the shaped beam **6** is symmetrical with respect to the core **7** and has the axis **Y** perpendicular to the plane of the photovoltaic modules **20, 30.**

Furthermore, the second platband **9** is formed by two projecting tabs **90, 91** that have a convergent profile with respect to the core 7 and extend under the plane defined by each photovoltaic module.

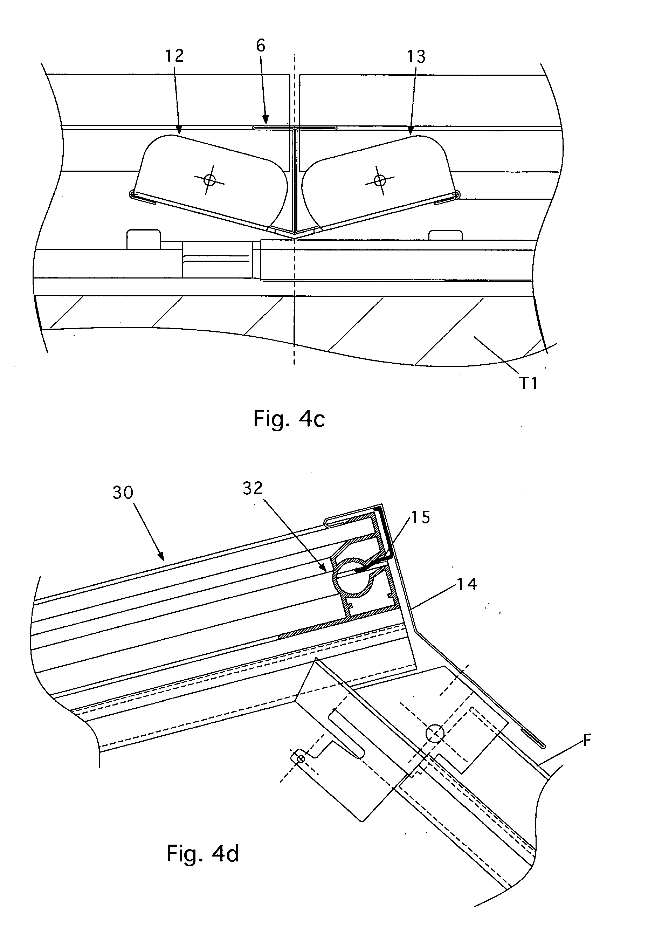

The substantially H-shaped beam **6** ends, outside the frame of the photovoltaic module, with two head plates **12, 13** incident on each other and orthogonal to the plane defined by each one of the tabs of each platband, as shown in Figure 4c.

The area where there are the plates **12, 13** is the bottom area of the photovoltaic apparatus **1.**

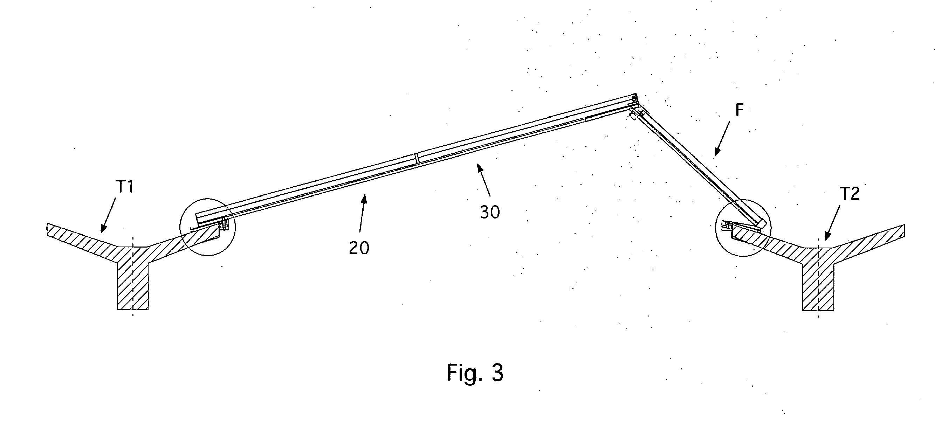

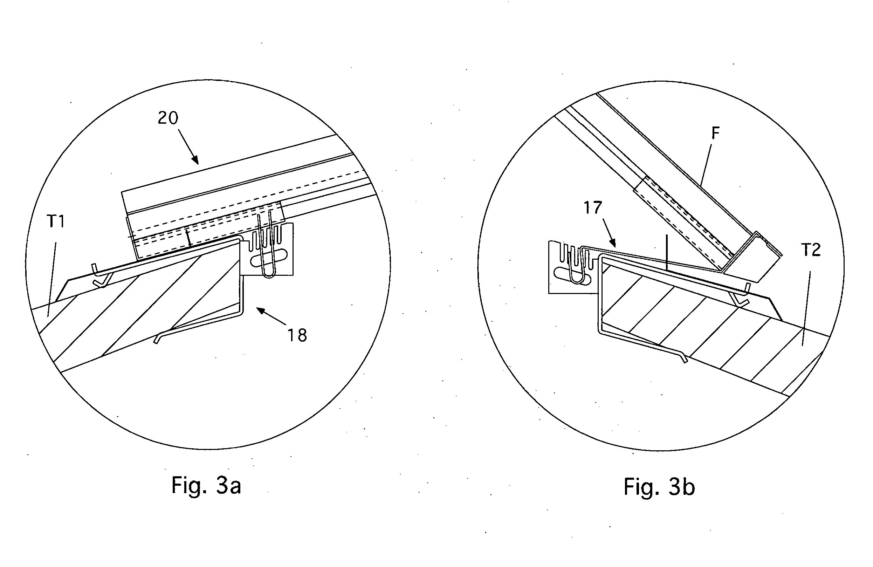

The bottom area of the photovoltaic apparatus is shown also in the detail of Figure 3a, where it is possible to observe the connection of the bottom part of the photovoltaic module to a supporting beam **T1** of the building.

With reference to Figure 4d, the modular photovoltaic apparatus **1** comprises also coupling means for connection to terminal elements that delimit the photovoltaic apparatus **1.**

Said coupling elements, visible in the detail of Figure 4d, comprise a casing **14** provided with a shaped projection **15,** which is fixed to the casing and serves as a spring that snap-fits into the open portion of the channel **32** of the photovoltaic module **30.**

It should be noted that all the different channels described up to now substantially have the same C-shaped cross section profile.

In practice and with reference to Figures 4a, 4b, 4c, 4d, the assembly of the photovoltaic apparatus **1** takes place as follows.

First the photovoltaic modules are assembled crosswise by means of the H-shaped beam **6** that is inserted with a sliding joint between the channels **21, 31** of the two adjacent photovoltaic modules **20, 30;** successively the shaped bar **5** is inserted and then the photovoltaic modules **20, 30** are inserted in the H-shaped profile of the beam **6.**

Then, the casing **14** is snap-fitted in the head area of the photovoltaic apparatus, so that the shaped projection **15** connected to it is snap-fitted in the channel **32** of the photovoltaic module **30** delimited by it.

It can be observed that the casing **14** keeps the photovoltaic module **30** and an underlying window **F** joined together.

The photovoltaic modules located in the head area of the photovoltaic apparatus **1** (see Figures 3 and 3b) are connected to the window **F**, which is then fixed at the base to a supporting beam **T2** of the building through a first bracket **17** according to the procedure illustrated below.

The base of the photovoltaic module **20** that is located in the bottom area of the photovoltaic apparatus **1** is fixed to a supporting beam **T1** of the building through a second bracket **18.**

In the case of heavy rain or snow, the water that should penetrate in the interspaces between one photovoltaic module and the other is partially collected in the C-shaped channels.

In case of exceptional atmospheric events like heavy rain or snow, also the track defined by the tabs **90, 91** can serve as a further safety drainage system to guarantee the tightness of the apparatus **1.**

Once the water has reached the two shaped plates **12, 13,** it flows out through the interspace between the two shaped plates and any excess water overflowing the bracket **18** ends on the supporting beam **T1.** In this way, the water remains outside the covering.

Regarding the head area of the photovoltaic apparatus **1,** rainwater overflows and ends on the supporting beam **T2** passing over the casing **14** that serves as a weathered element.

As can be seen, the photovoltaic apparatus also serves as a sealing element that prevents water infiltrations.

The above clearly shows that the modular photovoltaic apparatus that is the subject of the invention achieves all the set objects, that is, it serves as a covering element for buildings and is easier to assemble than the photovoltaic apparatuses of the known type.

In particular, the modular photovoltaic apparatus according to the invention is watertight, as it uses the structure of the photovoltaic modules to channel the water, and therefore does not require the use of gaskets in plastic material.

In the construction phase, the modular photovoltaic apparatus that is the subject of the invention can be subjected to modifications, and variants can be obtained. Such modifications and variants shall all be considered protected by the present patent, provided that they fall within the scope of the claims expressed below.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Modular photovoltaic apparatus (1) comprising two or more photovoltaic modules (2; 20; 30) adjacent to each other, each one of which comprises a plurality of photovoltaic cells (4), at least one first perimeter edge (19) and at least one second perimeter edge (23) incident on each other being provided along the sides of the perimeter of each photovoltaic module (2; 20; 30), in each one of which it is possible to identify at least one channel (21; 31, 32) that houses connection means for the connection of two adjacent photovoltaic modules (20; 30), wherein said adjacent photovoltaic modules (20; 30) are spaced in such a way as to define an interspace (24) communicating with the external surface (26; 36) of said photovoltaic modules (20; 30), said at least one channel (21; 31) being provided with a duct (27; 37) that communicates with said interspace (24) to channel the rainwater that falls by gravity from said external surface (26; 36)
of said photovoltaic modules (20; 30) in said at least one channel (21; 31) through said interspace (24) and said duct (27; 37), **characterized in that** said connection means are arranged along said second perimeter edge (23), coupled in said at least one channel (21; 31) and comprise a shaped beam (6) whose cross section has a profile that substantially recalls the shape of an H and is defined by a core (7) delimited by a first (8) and a second platband (9), said second platband (9) being symmetrical with respect to said core (7) and to an axis (Y) perpendicular to the plane of each photovoltaic module and comprising two projecting tabs (90, 91) converging towards said core (7) and defining a substantially V-shaped profile that extends under the plane defined by each photovoltaic module (20; 30) defining a further safety drainage system for the outflow of water.

2. Photovoltaic apparatus (1) according to claim 1), **characterized in that** said connection means comprise first connection means arranged along said first perimeter edge (19), coupled in said at least one channel (21; 31) and comprising a shaped bar (5) whose cross section has a shaped profile suited to be matched with the substantially C-shaped profile of said at least one channel (21; 31) and comprising a shaped projection in which it is possible to identify a first part (50) coupled in said at least one channel (21; 31) and a second part (51) coupled in said duct (27; 37), wherein the upper part of said shaped profile of said shaped bar (5) channels the water coming from said interspace (24).

3. Photovoltaic apparatus (1) according to claim 2, **characterized in that** said first platband (8) is symmetrical with respect to said core (7) and to an axis (Y) perpendicular to the plane of each photovoltaic module (20; 30), said first platband (8) comprising two projecting tabs (80, 81), each one of which is coupled in the channel formed by two adjacent photovoltaic modules (20; 30).

4. Photovoltaic apparatus (1) according to any of the preceding claims, **characterized in that** said duct (27; 37) defines a longitudinal axis (X) incident on the plane defined by each photovoltaic module (20; 30) and connects said interspace (24) to said at least one channel (21; 31) for the outflow of water.

5. Photovoltaic apparatus (1) according to any of the preceding claims, **characterized in that** said at least one channel (32) also houses coupling means for connection to terminal elements that delimit one or more of said photovoltaic modules (2).

6. Photovoltaic apparatus (1) according to claim 5, **characterized in that** said coupling means comprise a shaped projection (15) that is connected to a casing (14) delimiting one or more of said photovoltaic modules (2) and whose profile matches the profile of said at least one channel (21; 31) and can be snap-fitted in said at least one channel (21; 31).

## Patentansprüche

1. Modulare Photovoltaikvorrichtung (1), zwei oder mehr nebeneinander liegende Photovoltaikmodule (2; 20; 30) umfassend, von denen jedes eine Vielzahl Solarzellen (4) umfasst, wobei wenigstens eine erste Umfangskante (19) und wenigstens eine zweite Umfangskante (23) entlang den Umfangsseiten jedes Photovoltaikmoduls (2; 20; 30) vorhanden sind und aufeinander einfallen, und wobei in jeder dieser Kanten wenigstens ein Kanal (21; 31, 32) identifizierbar ist, der Verbindungsmittel zur Verbindung von zwei nebeneinander liegenden Photovoltaikmodulen (20; 30) enthält, wobei die besagten, nebeneinander liegenden Photovoltaikmodule (20; 30) derart voneinander distanziert sind, dass sie einen Zwischenraum (24) definieren, der mit der Außenfläche (26; 36) der besagten Photovoltaikmodule (20; 30) kommuniziert, wobei der besagte, wenigstens eine Kanal (21; 31) mit einer mit dem besagten Zwischenraum (24) kommunizierenden Leitung (27; 37) versehen ist, um das durch Schwerkraft von der besagten Außenfläche (26; 36) der besagten Photovoltaikmodule (20; 30) in den besagten, wenigstens einen Kanal (21; 31) fallende Regenwasser über den besagten Zwischenraum (24) und die besagte Leitung (27; 37) zu kanalisieren, **dadurch gekennzeichnet, dass** die besagten Verbindungsmittel entlang der besagten, zweiten Umfangskante (23) angeordnet und in dem besagten, wenigstens einen Kanal (21; 31) gekoppelt sind und einen geformten Balken (6) umfassen, dessen Querschnitt ein Profil aufweist, das im Wesentlichen H-förmig und durch einen Kern (7) definiert ist, der durch ein erstes (8) und ein zweites Deckflacheisen (9) begrenzt ist, wobei das besagte zweite Deckflacheisen (9) symmetrisch zum besagten Kern (7) und zu einer Achse (Y) ist, die lotrecht zur Ebene jedes Photovoltaikmoduls steht und zwei herausragende Laschen (90, 91) umfasst, die zu dem besagten Kern (7) konvergieren und ein im Wesentlichen V-förmiges Profil definieren, das sich unter der durch jedes Photovoltaikmodul (20; 30) definierten Ebene erstreckt und ein weiteres Sicherheits-Dränagesystem für den Wasserabfluss definiert.

2. Photovoltaikvorrichtung (1) gemäß Patenanspruch 1), **dadurch gekennzeichnet, dass** die besagten Verbindungsmittel erste Verbindungsmittel umfassen, die entlang der besagten, ersten Umfangskante (19) angeordnet und in dem besagten, wenigstens einen Kanal (21; 31) gekoppelt sind und eine geformte Stange (5) umfassen, deren Querschnitt ein geformtes Profil aufweist, das geeignet ist, mit dem im Wesentlichen C-förmigen Profil des besagten, wenigtsens einen Kanals (21; 31) zusammenzupassen, und eine geformte Auskragung umfassen, in der ein erster, in den wenigstens einen Kanal (21; 31) gekoppelter Teil (50) identifizierbar ist, sowie einen zweiten Teil (51), der in die besagte Leitung (27; 37) gekoppelt ist, wobei der obere Teil des besagten, geformten Profils der besagten, geformten Stange (5) das aus dem besagten Zwischenraum (24) kommende Wasser kanalisiert.

3. Photovoltaikvorrichtung (1) gemäß Patentanspruch 2), **dadurch gekennzeichnet, dass** das besagte, erste Deckflacheisen (8) symmetrisch zu dem besagten Kern (7) und zu einer Achse (Y) ist, die lotrecht zur Ebene jedes Photovoltaikmoduls (20; 30) steht, wobei das besagte erste Deckflacheisen (8) zwei herausragende Laschen (80, 81) umfasst, von denen jede in dem Kanal gekoppelt ist, der durch zwei nebeneinander liegende Photovoltaikmodule (20; 30) gebildet wird.

4. Photovoltaikvorrichtung (1) gemäß eines jeden der vorstehenden Patentansprüche, **dadurch gekennzeichnet, dass** die besagte Leitung (27; 37) eine Längsachse (X) definiert, die auf die durch jedes Photovoltaikmodul (20; 30) definierte Fläche einfällt und den besagten Zwischenraum (24) mit dem wenigstens einen Kanal (21; 31) für den Wasserabfluss verbindet.

5. Photovoltaikvorrichtung (1) gemäß eines jeden der vorstehenden Patentansprüche, **dadurch gekennzeichnet, dass** der besagte, wenigstens eine Kanal (32) außerdem Kupplungsmittel für die Verbindung mit Abschlusselementen enthält, welche eines oder mehrere der besagten Photovoltaikmodule (2) begrenzen.

6. Photovoltaikvorrichtung (1) gemäß Patentanspruch 5), **dadurch gekennzeichnet, dass** die besagten Kupplungsmittel eine geformte Auskragung (15) umfassen, die mit einem Gehäuse (14) verbunden ist, das ein oder mehrere der besagten Photovoltaikmodule (2) begrenzt und dessen Profil mit dem Profil von besagtem wenigstens einem Kanal (21; 31) zusammenpasst und in den besagten, wenigstens einen Kanal (21; 31) eingerastet werden kann.

## Revendications

1. Appareil photovoltaïque modulaire (1) comprenant deux ou plusieurs modules photovoltaïques (2; 20; 30) adjacents entre eux, chacun desquels comprend une pluralité de cellules photovoltaïques (4), au moins un premier bord périmétrique (19) et au moins un deuxième bord périmétrique (23) incidents entre eux étant prévus le long des côtés du périmètre de chaque module photovoltaïque (2; 20; 30), sur chacun desquels il est possible d'identifier au moins un canal (21; 31, 32) qui loge des moyens de connexion pour la connexion de deux modules photovoltaïques adjacents (20; 30) entre eux, où lesdits modules photovoltaïques adjacents (20; 30) sont espacés de façon à définir un espace interne (24) communiquant avec la surface extérieure (26; 36) desdits modules photovoltaïques (20; 30), ledit au moins un canal (21; 31) étant doté d'un conduit (27; 37) qui communique avec ledit espace interne (24) pour acheminer l'eau de pluie qui tombe par gravité de ladite surface extérieure (26; 36) desdits modules photovoltaïques (20; 30) dans ledit au moins un canal (21; 31) à travers ledit espace interne (24) et ledit conduit (27; 37), **caractérisé en ce que** lesdits moyens de connexion sont disposés le long dudit deuxième bord périmétrique (23), couplés dans ledit au moins un canal (21; 31) et comprennent une poutre galbée (6) dont la section transversale présente un profil qui rappelle essentiellement la forme d'un H et est définie par un noyau (7) délimité par une première (8) et une deuxième plate-bande (9), ladite deuxième plate-bande (9) étant symétrique par rapport audit noyau (7) et à un axe (Y) perpendiculaire au plan de chaque module photovoltaïque et comprenant deux languettes saillantes (90, 91), convergeant vers ledit noyau (7) et définissant un profil essentiellement en forme de V qui s'étend au-dessous du plan défini par chaque module photovoltaïque (20; 30) en définissant un système de drainage de sécurité supplémentaire pour l'écoulement de l'eau.

2. Appareil photovoltaïque (1) selon la revendication 1), **caractérisé en ce que** lesdits moyens de connexion comprennent de premiers moyens de connexion disposés le long dudit premier bord périmétrique (19) couplés dans ledit au moins un canal (21; 31) et comprenant une barre galbée (5) dont la section transversale présente un profil galbé qui peut être conjugué avec le profil essentiellement en forme de C dudit au moins un canal (21; 31) et comprenant une saillie galbée dans laquelle il est possible d'identifier une première partie (50) couplée dans ledit au moins un canal (21; 31), et une deuxième partie (51) couplée dans ledit conduit (27; 37), où la partie supérieure dudit profil galbé de ladite barre galbée (5) achemine l'eau provenant dudit espace interne (24).

3. Appareil photovoltaïque (1) selon la revendication 2), **caractérisé en ce que** ladite première plate-bande (8) est symétrique par rapport audit noyau (7) et à un axe (Y) perpendiculaire au plan de chaque module photovoltaïque (20; 30), ladite première plate-bande (8) comprenant deux languettes saillantes (80, 81), chacune desquelles est couplée dans le canal formé par deux modules photovoltaïques adjacents (20; 30).

4. Appareil photovoltaïque (1) selon l'une quelconque des revendications précédentes, **caractérisé en ce que** ledit conduit (27; 37) définit un axe longitudinal (X) incident sur le plan défini par chaque module photovoltaïque (20; 30) et relie ledit espace interne (24) audit au moins un canal (21; 31) pour l'écoulement de l'eau.

5. Appareil photovoltaïque (1) selon l'une quelconque des revendications précédentes, **caractérisé en ce que** ledit au moins un canal (32) loge en outre des moyens de couplage pour la connexion à des éléments finaux qui délimitent un ou plusieurs desdits modules photovoltaïques (2).

6. Appareil photovoltaïque (1) selon la revendication 5), **caractérisé en ce que** lesdits moyens de couplage comprennent une saillie galbée (15) qui est reliée à un boîtier (14) délimitant un ou plusieurs desdits modules photovoltaïques (2) et ayant un profil conjugué à celui dudit au moins un canal (21; 31) et qui peut être fixé par encliquetage dans ledit au moins un canal (21; 31).
